# EUROPEAN PATENT SPECIFICATION

(11) **EP 2 360 503 B1**
(45) Date of publication and mention of the grant of the patent: **14.08.2013**
(21) Application number: 10290050.3
(22) Date of filing: 04.02.2010
(51) Int. Cl.: H01B 7/38, H02G 1/12, G02B 6/44

(54) **Method of stripping an outer layer from an intermediate layer of a cable, cable, distribution system, and base station thereof**
Verfahren zum Abziehen einer äußeren Schicht von einer Zwischenschicht eines Kabels, Kabel, Verteilungssystem und Basisstation damit
Procédé de séparation de la couche extérieure d'une couche intermédiaire d'un câble, câble, système de distribution et station de base correspondante

(43) Date of publication of application: 24.08.2011
(73) Proprietor: Alcatel Lucent, 75007 Paris (FR)
(72) Inventor: Greiner, Martin, 30966 Hemmingen (DE); Mahlandt, Erhard, 30880 Laatzen (DE); Baumann, Sven-Oliver, 30629 Hannover (DE)
(74) Representative: Mildner, Volker

(56) References cited:
- EP-A1- 0 527 266
- US-A1- 2007 031 096

## Description

### FIELD OF THE INVENTION

The invention relates to a method for stripping an outer layer from an intermediate layer of a cable according to the preamble of claim 1, to a cable according to the preamble of claim 4, to a distribution system comprising the cable, and to a base station comprising the distribution system.

### BACKGROUND

Hybrid cables using a combination of an optical conductor and an electrical conductor within a single cable can reduce number of installation cables and installation time.

Hybrid cables are known, which comprise the electrical conductor as a cylindrical hollow conductor and which comprise the optical conductor being located within the cylindrical hollow conductor.

Further hybrid cables comprise an inner cylindrical hollow conductor enclosing the optical conductor, an insulating material enclosing the inner cylindrical hollow conductor and an outer cylindrical hollow conductor enclosing the insulating material. The inner cylindrical hollow conductor, the insulating material, and the outer cylindrical hollow conductor result in a coaxial cable, which comprises the optical conductor in a longitudinal axis of the coaxial cable.

Even further hybrid cables comprise a separator layer between the inner cylindrical hollow conductor and the optical conductor.

In many applications, the inner and the outer cylindrical hollow conductor of a coaxial cable have to be adapted to a specific loop resistance, which should not be exceeded.

The loop resistance is a sum of resistances of the inner and the outer cylindrical hollow conductor in series. The resistances of the inner and the outer cylindrical hollow conductor depend on conductor material such as copper or aluminium, on cable length, and size of conductor cross section. Typically, the loop resistance has to be selected, such that a specific voltage drop between a power supply unit and an electricity consumer should not be exceeded.

Furthermore, one of the cylindrical hollow conductors may be used for grounding purpose. In such a case, the conductor cross section has to meet requirements for surge protection, which are normally given by standards or by national law.

A thickness of the inner and the outer cylindrical hollow conductor may provide a problem in cutting the inner and outer cylindrical hollow conductor and not cutting the optical conductor. The optical conductor has to be uncovered, if the cable is connected for example to a connector or the optical conductor has to be applied to an optical splice.

The thickness of the inner and the outer cylindrical hollow conductor may provide a further problem in stripping the inner and the outer cylindrical hollow conductor from the cable for uncovering the optical conductor, because a longitudinal force, that needs to be applied to the inner and the outer cylindrical hollow conductor cable is in direct correlation to a length of the optical conductor, which must be uncovered. For optical splices, the length of the uncovered optical conductor may be in a range of 0.5 m up to 1 m. In such cases, the longitudinal force for stripping the inner and outer cylindrical hollow conductor from the cable may exceed stability and stiffness of the optical conductor.

Documents EP 0 527 266 A1 and US 2007/0031096 A1 both disclose an optical fibre cable comprising an intermediate layer that improves the strippability of the cable.

### SUMMARY

The way of stripping the inner and the outer cylindrical hollow electrical conductor from the inner optical conductor effects optical and mechanical properties of the inner optical conductor.

Therefore, it is a main object of the invention to provide an improved installation method and an improved cable.

The object is achieved by a method for stripping at least one outer layer from an intermediate layer of a cable, wherein the at least one outer layer encloses the intermediate layer, wherein the said method comprises the steps of cutting the at least one outer layer, stripping the at least one outer layer from the intermediate layer, and uncovering at least one electrical or optical conductor of the cable being enclosed by the intermediate layer, and wherein the stripping is supported by an adhesion reducing material characteristic of the intermediate layer for an interface between the intermediate layer and the at least one outer layer. The object is further achieved by a cable.

The cable may be for example a cable, wherein the at least one outer layer comprises a tubular inner electrical conductor and a tubular outer electrical conductor and wherein the at least one electrical or optical conductor is an optical fibre.

The invention provides a first benefit of reducing a static friction and/or a kinetic friction of the interface between the intermediate layer and the at least one outer layer. A reduced static friction allows to get the at least one outer layer easier into a movement relative to the intermediate layer and a reduced dynamic friction allows to strip the at least one outer layer from the intermediate layer with reduced expenditure of energy. The invention provides second benefits of maintaining electrical or optical characteristics of the at least one electrical or optical conductor and/or of not damaging the at least one electrical or optical conductor especially if the at least one electrical or optical conductor is an optical fibre. The invention provides a third benefit of making the installation method easier and faster, because an installer has less problems to uncover the at least one electrical or optical conductor.

In an embodiment of the invention, an expenditure of energy for stripping the outer layer from the intermediate layer may be below a predefined threshold.

This offers an advantage of making the installation method even more efficient because the installer itself may need only a low expenditure of energy for stripping the outer layer from the intermediate layer or a machine or tool may be used, which may apply the expenditure of energy with the predefined threshold. The predefined threshold may be determined with an adequate spacing from an expenditure of energy threshold of inducing mechanical or optical irreversible modifications to the at least one electrical or optical conductor.

The embodiment provides a further advantage of fastening the installation method and reducing installation costs, because the installer is able to install more cables in a predefined time frame.

In a further embodiment of the invention, the predefined threshold may be adapted to at least one mechanical characteristic of the electrical or optical conductor and/or adapted to at least one mechanical characteristic of the at least one outer layer. The further embodiment offers a first benefit of using the at least one mechanical characteristic of the electrical or optical conductor as an upper limit for the predefined threshold. Preferably, the predefined threshold is well below a threshold of inducing mechanical, electrical, or optical modifications to the at least one electrical or optical conductor. The further embodiment offers a second benefit of using the at least one mechanical characteristic of the at least one outer layer as a lower limit for the predefined threshold. Weight, thickness, and/or stiffness of the material of the at least one outer layer may determine a minimum expenditure of energy required to move and strip the at least one outer layer from the intermediate layer.

In a preferred embodiment of the invention, the adhesion reducing material characteristic may be adapted by a porosity of a material composition of the intermediate layer. The material composition may be for example a brittle material.

This provides an advantage of using the porosity of the material composition, that the intermediate layer crumbles into several pieces, when the at least one outer layer is striped from the intermediate layer. By the crumbling process the adhesion between the at least one outer layer and the intermediate layer is reduced and/or is repealed.

In a further preferred embodiment of the invention, the adhesion reducing material characteristic may be adapted by a roughness of an outer surface of the intermediate layer.

This provides a benefit of using the roughness of the outer surface of the intermediate layer in such a way, that a sliding of the at least one outer layer on the intermediate layer with a lowered friction resistance is improved with a smooth surface, when the at least one outer layer is striped from the intermediate layer. By the smooth surface the adhesion between the at least one outer layer and the intermediate layer is reduced.

In an even further embodiment of the invention, the adhesion reducing material characteristic may be adapted by a geometrical outer form of the intermediate layer.

This offers a possibility of using the geometrical outer form of the intermediate layer for example in such a way, that a sliding of the at least one outer layer on the intermediate layer with a lowered friction resistance is improved by a reduced contact surface, when the at least one outer layer is striped from the intermediate layer.

In an even further preferred embodiment of the invention, the intermediate layer may be adhesive to the at least one electrical or optical conductor. This provides a benefit of providing an interlock for the at least one electrical or optical conductor in such a way, that the at least one electrical or optical conductor are held in place and cannot move within the intermediate layer. If there would be no interlock especially between the at least one optical conductor and the intermediate layer, the at least one optical conductor could move relative to a central longitudinal axis of the cable and thereby disturbances such as phase rotation or polarization rotation of an optical signal within the at least one optical conductor could happen.

According to a further embodiment of the invention, the at least one electrical or optical conductor may comprise a first protection layer adhesive to the at least one electrical or optical conductor and the cable may further comprise a second protection layer between the intermediate layer and the at least one electrical or optical conductor.

This provides a first benefit of protecting several of the at least one electrical or optical conductors against each other by the first protection layers on the one hand against mechanical impacts and on the other hand against short circuits, if the conductors are electrical conductors. This provides a second benefit of using the second protection layer to provide a radial force to the at least one electrical or optical conductor for interlocking purposes and/or as a further protection, when the at least one outer layer is cut during the installation of the cable.

According to an even further embodiment of the invention, the tubular inner conductor may be a hollow corrugated inner conductor and the tubular outer conductor may be a corrugated outer conductor. Corrugated tubular conductors with a corrugation in the form of a wavelike changing inner and outer diameter will be used more often for installation purposes, because the tubular conductors are made flexible by the corrugation and such flexibility allows using cables with coaxial conductors in many application areas such as heating, machine technology, or line engineering.

In a further embodiment for a distribution system comprising at least three cables with features of one or several of the embodiments describe above, a first one of the at least three cables may comprise at least one further optical fibre adjacent to the optical fibre, the tubular inner conductors of the at least three cables may be interconnected, the tubular outer conductors of the at least three cables may be interconnected, the optical fibre of the first one of the at least three cables may be connected to the optical fibre of a second one of the at least three cables, and the at least one further optical fibre of the first one of the at least three cables may be connected to the optical fibre of a third one of the at least three cables.

The first one of the further embodiments for the distribution system offers a first benefit of requiring only one distribution system for distributing the electrical and the optical conductors. This provides a second benefit of reducing installation space for the distribution system. Furthermore, this provides a third benefit of reducing installation costs.

In an even further embodiment for a base station comprising the distribution system, the base station further comprises at least two radio remote units, the first one of the at least three cables is connected to the base station and to the distribution system, the second one of the at least three cables is connected to a first one of the at least two radio remote units and to the distribution system, the third one of the at least three cables is connected to a second one of the at least two radio remote units and to the distribution system, the tubular inner and outer conductors provide a voltage feed for the at least two radio remote units, the optical fibre provides first data for at least one radio link of the first one of the at least two radio remote units, and the at least one further optical fibre provides second data for at least one radio link of the second one of the at least two radio remote units.

The even further embodiment allows reducing installation time and installation costs for connecting two or more radio remote units to the base station of a radio communication system. Preferably, one of the electrical conductors is used for ground connection and earth connection to reduce conductor material and save installation time and installation costs.

In a further preferred embodiment for the base station, the at least three cables comprise at least two optical fibres, a first one of the at least two optical fibres may be adapted to provide a downlink transmission between the radio base station and the at least two radio remote units, and a second one of the at least two optical fibres may be adapted to provide an uplink transmission between the radio base station and the at least two radio remote units.

This allows to further reduce installation time and installation costs for connecting the two or the more radio remote units to the base station of the radio communication system, because uplink and downlink data connections are installed simultaneously by using same cables and a same distribution system.

Further advantageous features of the invention are defined and are described in the following detailed description of the invention.

### BRIEF DESCRIPTION OF THE FIGURES

The embodiments of the invention will become apparent in the following detailed description and will be illustrated by accompanying figures given by way of non-limiting illustrations.
Figure 1 shows schematically a block diagram of a side view of a cable according to an embodiment of the invention.
Figure 2 shows schematically a block diagram of a cross-sectional view of a cable according to a further embodiment of the invention.
Figure 3 shows schematically a block diagram of a side view of a cable according to an even further embodiment of the invention.
Figure 4 shows schematically a block diagram of a method for stripping an outer layer from an intermediate layer of a cable according to the embodiments of the invention.
Figure 5 shows schematically a block diagram of a top view of a distribution system according to a preferred embodiment of the invention.
Figure 6 shows schematically a block diagram of a base station of a radio communication system according to a further preferred embodiment of the invention.

### DESCRIPTION OF THE EMBODIMENTS

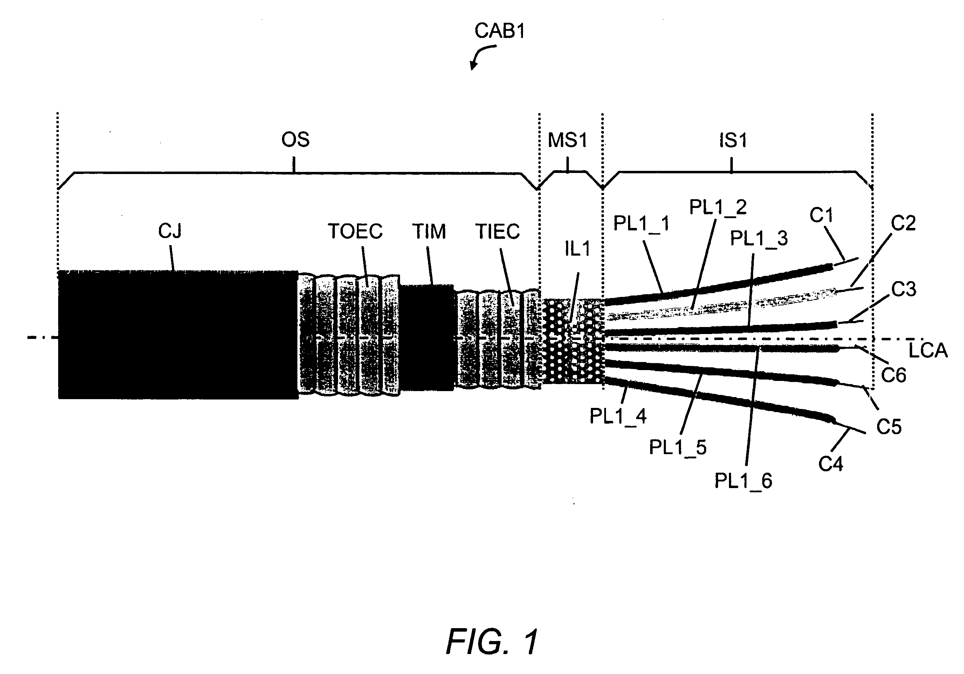

Figure 1 shows schematically a block diagram of a side view of a cable CAB1 according to an embodiment of the invention.

A cross section of the cable CAB1 according to a longitudinal central axis LCA of the cable CAB1 comprises an outer section OS, a middle section MS1 within the outer section OS, and an inner section IS1 within the middle section MS1.

The outer section OS may comprise an outer layer such as cable jacket or a cable sheath such as a plastic sheath. In an alternative, the outer section OS may comprise several outer layers such as a tubular electrical conductor and a cable jacket enclosing the tubular electrical conductor. In a further alternative, the outer section OS may comprise a tubular inner electrical conductor TIEC, a tubular insulating material TIM enclosing the tubular inner electrical conductor TIEC, a tubular outer electrical conductor TOEC enclosing the tubular insulating material TIM, and a cable jacket CJ enclosing the tubular outer electrical conductor TOEC as shown in Figure 1. Preferably, the tubular inner electrical conductor TIEC is a hollow corrugated inner conductor with a solid metal material such as copper or aluminium and the tubular outer electrical conductor TOEC is a hollow corrugated outer conductor with a further or a same solid metal material. The hollow corrugated inner conductor TIEC and the hollow corrugated outer conductor may be helically or annularly corrugated. The hollow corrugated inner conductor TIEC and the hollow corrugated outer conductor may use a same type of corrugation or different type of corrugation. Preferably, the tubular inner electrical conductor TIEC is annularly corrugated and the tubular outer electrical conductor TOEC is helically corrugated.

In an alternative, the tubular inner electrical conductor TIEC and the tubular outer electrical conductor TOEC may be tubular electrical conductors with a flat inner and outer surface.

In a further alternative, instead of the solid metal material a woven metal material made from thin metal wires may be used.

The inner section IS1 may comprise in a first alternative one or several optical conductors C1, C2, C3, C4, C5, C6 such as optical fibres with a fibre core, a fibre cladding, a fibre buffer, and an outer fibre jacket. In a second alternative, the inner section IS1 may comprise one or several electrical conductors C1, C2, C3, C4, C5, C6 such as insulated wires for electrical signals or electric voltage. In a third alternative, the inner section IS1 may comprise a mix of one or several optical conductors and one or several electrical conductors.

The electrical or optical conductors C1, C2, C3, C4, C5, C6 may comprise first protection layers PL1_1, PL1_2, PL1_3, PL1_4, PL1_5, PL1_6. The first protection layers PL1_1, PL1_2, PL1_3, PL1_4, PL1_5, PL1_6 may be adhesive to the electrical or optical conductors C1, C2, C3, C4, C5, C6. The first protection layers PL1_1, PL1_2, PL1_3, PL1_4, PL1_5, PL1_6 may protect the electrical or optical conductors C1, C2, C3, C4, C5, C6 against each other according to mechanical impacts and/or according to short circuits, if the conductors C1, C2, C3, C4, C5, C6 are electrical conductors. The middle section MS1 comprises an intermediate layer IL1. Due to the gravitational force and due to an adhesive effect between the inner surface of the outer section OS and the outer surface of the intermediate layer IL1, the outer section OS of the cable CAB1 is in direct contact with the intermediate layer IL1. A size of a contact surface per length unit between the inner surface of the outer section OS and the outer surface of the intermediate layer IL1 depends on the outer geometrical form and outer diameter of the intermediate layer IL1 and depends on the inner geometrical form and inner diameter of the outer section OS. The size of the contact surface per length unit further depends on a roughness of the inner surface of the outer section OS and on a roughness of the outer surface of the intermediate layer IL1. According to a main aspect of the invention, the intermediate layer IL1 comprises an adhesion reducing material characteristic for an interface between the intermediate layer IL1 and the outer section OS. A friction such as a static friction and a dynamic friction of the interface between the intermediate layer IL1 and the outer section OS for stripping the outer section OS from the intermediate layer IL1 may be adapted for example by a porosity of a material composition of the the intermediate layer IL1. The material composition of the intermediate layer IL1 may be for example a brittle filler material based on polyolefine elastomers or ethylene polypropylene rubber. If the one or several outer layers TIEC, TIM, TOEC, CJ are stripped from the intermediate layer IL1, the brittle filler material breaks apart in several pieces and thereby reduces the adhesion between the inner surface of the outer section OS and the outer surface of the intermediate layer IL1. One part of the brittle filler material may adhere to the inner surface of the outer section OS and will be stripped from the intermediate layer IL1 together with the outer section OS. Another part of the brittle filler material may adhere to the one or several electrical or optical conductors C1 - C6.

In an alternative, the friction of the interface between the intermediate layer IL1 and the outer section OS for stripping the outer section OS from the intermediate layer IS may be adapted by the roughness of the outer surface of the intermediate layer IL1. The roughness of the outer surface of the intermediate layer IL1 may be adapted for example by using a material for the intermediate layer IL1 with an inherent smooth surface such as polyamide. A low coefficient of friction may be obtained for example by using a material composition with nanoparticles.

In an alternative, the roughness of the outer surface of the intermediate layer IL1 may be adapted by polishing or smoothing the outer surface of the intermediate layer IL1 during fabrication of the cable CAB1 and before the outer section OS of the cable CAB1 is put over the intermediate layer IL1.

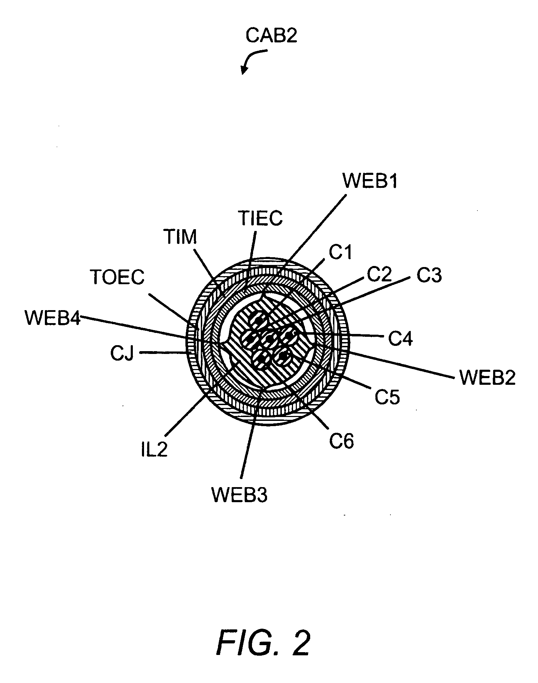

Figure 2 shows schematically a block diagram of a cross-sectional view of a cable CAB2 according to a further embodiment of the invention. The elements in Figure 2 that correspond to elements of Figure 1 have been designated by same reference numerals.

The cable CAB2 comprises an intermediate layer IL2. A geometrical outer form of the intermediate layer IL2 may be adapted in such a way, that the tubular inner electrical conductor TIEC is in contact with the intermediate layer IL2 along two lines or a few more than two lines. According to Figure 2, the intermediate layer IL2 preferably comprises two webs WEB1, WEB2 or a few more than two webs WEB3, WEB4 at the outer surface of the intermediate layer IL2 in a longitudinal direction of the cable CAB2 for a reduced contact surface with the inner surface of the tubular inner electrical conductor TIEC.

By reducing a contact surface between the intermediate layer IL2 and the tubular inner electrical conductor TIEC the adhesion between the intermediate layer IL2 and the tubular inner electrical conductor TIEC can be reduced.

The intermediate layer IL2 may fill in gaps between the electrical or optical conductors C1 to C6 as shown in Figure 2. Thereby, the intermediate layer IL2 is adhesive to the electrical or optical conductors C1 to C6.

In an alternative, the intermediate layer IL2 may comprise a sticky inner surface such as a surface of an adhesive tape and the electrical or optical conductors C1 to C6 may adhere to the sticky inner surface of the intermediate layer IL2.

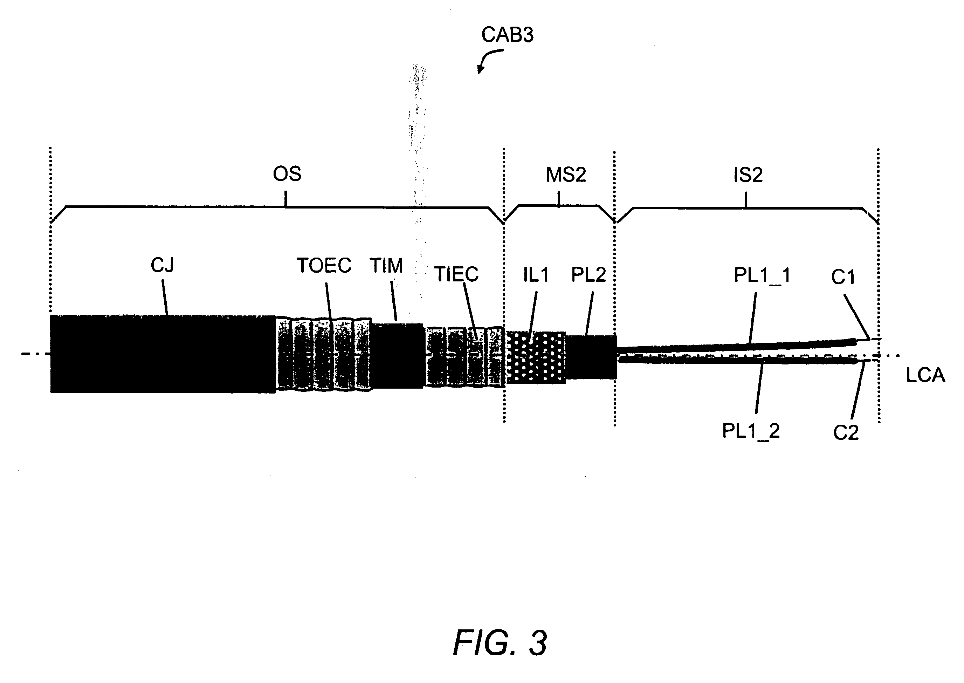

Figure 3 shows schematically a block diagram of a side view of a cable CAB3 according to an even further embodiment of the invention. The elements in Figure 3 that correspond to elements of Figure 1 or Figure 2 have been designated by same reference numerals.

In comparison to the cable CAB1, the cable CAB3 comprises in an inner section IS2 with the two electrical or optical conductors C1, C2.

Further in comparison to the cable CAB1, the cable CAB3 comprises a middle section MS2 with the intermediate layer IL1 and a second protection layer PL2. The intermediate layer IL1 may enclose the second protection layer PL2.

The second protection layer PL2 may further protect the two electrical or optical conductors C1, C2 against mechanical impacts and may provide a radial force to the two electrical or optical conductors C1, C2 for interlocking purposes to prevent movements of two electrical or optical conductors C1, C2 within the cable CAB3.

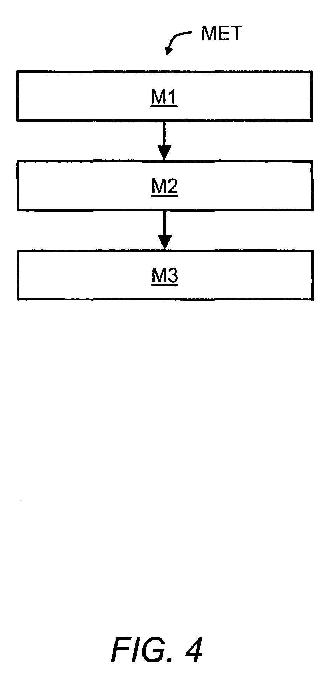

Referring to Figure 4, a block diagram of a method MET for stripping the one or several outer layers TIEC, TIM, TOEC, CJ from the intermediate layer IL1, IL2 of the cable CAB1, CAB2, CAB3 according to the embodiments of the invention is shown.

The sequence and the number of the steps for performing the method MET is not critical, and as can be understood by those skilled in the art, that the sequence and the number of the steps may vary without departing from the scope of the invention.

In a first step M1 during installation of the cable CAB1, CAB2, CAB3 and for connecting the one or several electrical or optical conductors C1 to C6 to one or several connectors, to a distribution system or to a device providing electrical or optical signals or electrical voltages for the one or several electrical or optical conductors C1 to C6, the one or several outer layers CJ, TOEC, TIM, TIEC are cut preferably by a blade of a cutting tool. The cutting has to be done in such a way, that the one or several electrical or optical conductors C1 to C6 are not cut and are not damaged.

Preferably, a depth of penetration may be adapted to an overall thickness of the one or several outer layers CJ, TOEC, TIM, TIEC.

In a further step M2, the one or several outer layers CJ, TOEC, TIM, TIEC are stripped from the intermediate layer IL1, IL2. The stripping may be done with muscular strength by the installer of the cable CAB1, CAB2, CAB3. Preferably, the stripping may be done by a stripping tool with an expenditure of energy, which may be preferably below a predefined threshold.

This offers an advantage of making the installation method MET more easier because the installer itself can use a low expenditure of energy for stripping the one or several outer layers CJ, TOEC, TIM, TIEC from the intermediate layer IL1, IL2 or a machine or tool may be used, which may apply the expenditure of energy with the predefined threshold.

The predefined threshold may be adapted to one or several mechanical characteristics of the one or several electrical or optical conductors C1 to C6.

Furthermore, the predefined threshold may be adapted to one or several mechanical characteristics of the one or several outer layers CJ, TOEC, TIM, TI EC.

Preferably, the predefined threshold may be determined with an adequate spacing from an expenditure of energy threshold of inducing mechanical or optical irreversible modifications to the one or several electrical or optical conductors C1 to C6.

Preferably, functions of the cutting tool and the stripping tool may be provided by a single cutting and stripping tool.

In a third step M3, the one or several electrical or optical conductors C1 to C6 are uncovered from the intermediate layer IL1, IL2.

The uncovering may be done for example by performing a second cutting of the intermediate layer IL1, IL2 and by stripping the intermediate layer IL1, IL2 from the one or several electrical or optical conductors C1 to C6. In an alternative, the uncovering may be done by crumbling the intermediate layer IL1, IL2 or residual parts of the intermediate layer IL1, IL2 not stripped in the step M2, if the intermediate layer IL1, IL2 is made for example from the brittle material.

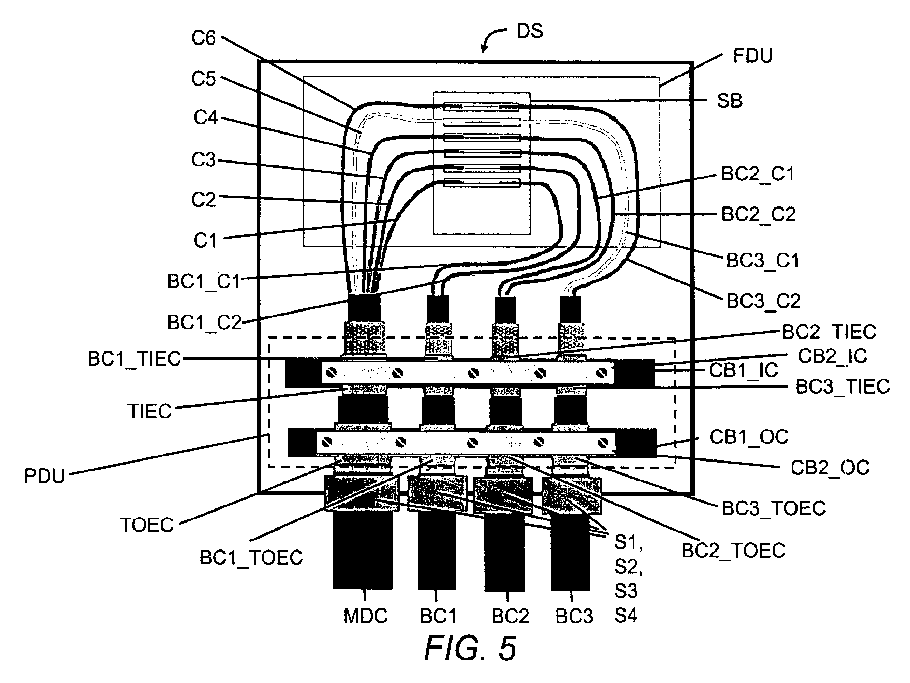

Figure 5 shows schematically a block diagram of a distribution system DS according to a preferred embodiment of the invention. The elements in Figure 5 that correspond to elements of Figure 1, Figure 2 or Figure 3 have been designated by same reference numerals.

The distribution system DS comprises a power distribution unit PDU, a fibre distribution unit FDU, a main distribution cable MDC, a first branch cable BC1, a second branch cable BC2, and a third branch cable BC3. In further alternatives, the distribution system DS may comprise two branch cables or more than three branch cables.

The main distribution cable MDC and the three branch cables BC1, BC2, BC3 comprise the main aspect of the invention and preferably one or several of the further features of the cables CAB1, CAB2, CAB3 described above.

The main distribution cable MDC exemplarily shown in Figure 5 comprises the tubular inner and outer electrical conductors TIEC, TOEC and six optical fibres C1, C2, C3, C4, C5, C6 located within the tubular inner and outer electrical conductors TIEC, TOEC.

The first branch cable BC1 may comprise tubular inner and outer electrical conductors BC1_TIEC, BC1_TOEC and two optical fibres BC1_C1, BC1_C2 located within the tubular inner and outer electrical conductors BC1_TIEC, BC1_TOEC.

The second branch cable BC2 may comprise tubular inner and outer electrical conductors BC2_TIEC, BC2_TOEC and two optical fibres BC2_C1, BC2_C2 located within the tubular inner and outer electrical conductors BC2_TIEC, BC2_TOEC.

The third branch cable BC3 may comprise coaxial corrugated electrical conductors BC3_TIEC, BC3_TOEC and two optical fibres BC3_C1, BC3_C2 located within the tubular inner and outer electrical conductors BC3_TIEC, BC3_TOEC.

The optical fibres C1, C2, C3, C4, C5, C6, BC1_C1, BC1_C2, BC2_C1, BC2_C2, BC3_C1, BC3_C2 may be spliced to each other in an integrated splice box SB as shown in Figure 5 or may be connected by using fibre connectors. The splicing may be done in the following way:
Optical fibre C1 of the main distribution cable MDC is connected to optical fibre BC1_C1 of the first branch cable BC1.
Optical fibre C2 of the main distribution cable MDC is connected to optical fibre BC1_C2 of the first branch cable BC1.
Optical fibre C3 of the main distribution cable MDC is connected to optical fibre BC2_C1 of the second branch cable BC2.
Optical fibre C4 of the main distribution cable MDC is connected to optical fibre BC2_C2 of the second branch cable BC2.
Optical fibre C5 of the main distribution cable MDC is connected to optical fibre BC3_C1 of the third branch cable BC3.
Optical fibre C6 of the main distribution cable MDC is connected to optical fibre BC3_C2 of the third branch cable BC3.

The tubular outer conductors TOEC, BC1_TOEC, BC2_TOEC, BC3_TOEC may be interconnected for example by using two clamping bars CB_OC1, CB_OC2. Preferably, the two clamping bars CB_OC1, CB_OC2 may comprise almost semicircular openings with diameters adapted to outer diameters of tubular outer conductors TOEC, BC1_TOEC, BC2_TOEC, BC3_TOEC.

The tubular inner conductors TIEC, BC1_TIEC, BC2_TIEC, BC3_TIEC may be interconnected for example by using two further clamping bars CB_IC1, CB_IC2. Preferably, the two further clamping bars CB_IC1, CB_IC2 may comprise almost semicircular openings with diameters adapted to outer diameters of tubular outer conductors TIEC, BC1_TIEC, BC2_TIEC, BC3_TIEC.

The distribution system DS preferably further comprises sealings S1, S2, S3, S4 between the outer surface of the cables MDC, BC1, BC2, BC3 and borders of openings in a housing of the distribution system DS. The sealings S1, S2, S3, S4 may be for example PG cable glands/fittings (PG = Panzergewinde, Stahlpanzerrohrgewinde (in German language), steel conduit thread (in English language)).

In an alternative, the distribution system DS may comprise instead of the fibre distribution unit FDU a wire distribution unit, if wires may be used instead of the optical fibres C1, C2, C3, C4, C5, C6, BCI_C1, BC1_C2, BC2_C 1, BC2_C2, BC3_C1, BC3_C2.

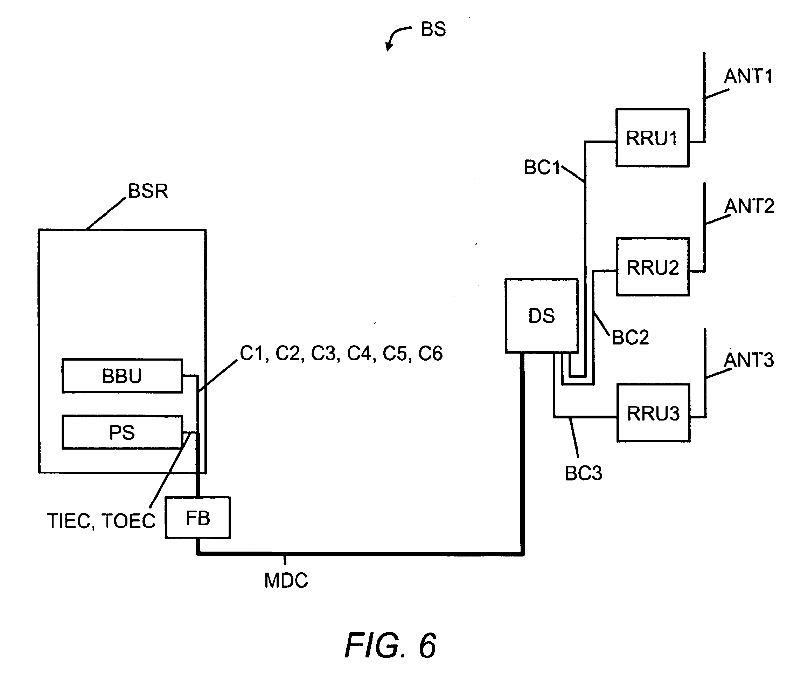

Figure 6 shows schematically a block diagram of a base station BS according to a further preferred embodiment of the invention. The elements in Figure 6 that correspond to elements of Figure 1, Figure 2, Figure 3, of Figure 5 have been designated by same reference numerals.

The base station BS comprises a base station rack BSR, the distribution system DS, a first radio remote unit RRU1 such as an RRH (RRH = radio remote head), a second radio remote unit RRU2, a third radio remote RRU3, the main distribution cable MDC for connecting a base band unit BBU and a power supply PS of the base station rack BSR to the distribution system DS, the first branch cable BC1 for connecting the first radio remote unit RRU1 to the distribution system DS, the second branch cable BC2 for connecting the second radio remote unit RRU2 to the distribution system DS, and the third branch cable BC3 for connecting the third radio remote unit RRU3 to the distribution system DS.

In further alternatives, the base station BS may comprise two radio remote units or more than three radio remote units.

The base station BS may be connected to neighbouring base stations or other network nodes of a radio communication system (not shown in Figure 6).

Preferably, the distribution system DS may be located near the radio remote units RRU1, RRU2, RRU3. The base station rack BSR may be located for example at ground level and the radio remote units RRU1, RRU2, RRU3 may be located on top of a roof.

The radio remote units RRU1, RRU2, RRU3 comprises one or several antennas ANT1, ANT2, ANT3 for radio links between the radio remote units RRU1, RRU2, RRU3 and one or several mobile stations such as mobiles, notebooks or PDAs (PDA = personal digital assistant).

The power supply PS provides an operating voltage or a voltage feed for the radio remote units RRU1, RRU2, RRU3 preferably via the tubular inner conductors of the cables MDC, BC1, BC2, BC3.

The base band unit BBU is adapted to provide signalling data or user data to be transmitted to the mobile stations or signalling data to be transmitted to the radio remote units RRU1, RRU2, RRU3 and is adapted to receive signalling data or user data to be received from the mobile stations or signalling data to be received from the radio remote units RRU1, RRU2, RRU3 via the electrical or optical conductors C1, C2, C3, C4, C5, C6, BC1_C1, BC1_C2, BC2_C1, BC2_C2, BC3_C1, BC3_C2.

Overvoltage and lightning protection is preferably provided via the tubular outer conductors of the cables MDC, BC1, BC2, BC3. In an alternative, a further electrical conductor within the tubular inner conductors TIEC, BC1_TIEC, BC2_TIEC, BC3_TIEC may be used for grounding and lightning protection purposes. If ground and earth shall not be combined on the tubular outer conductors TOEC, BC1_TOEC, BC2_TOEC, BC3_TOEC, ground may be connected to the tubular outer conductors TOEC, BC1_TOEC, BC2_TOEC, BC3_TOEC and earth may be connected to the further electrical conductor within the tubular inner conductors TIEC, BC1_TIEC, BC2_TIEC, BC3_TIEC.

By using the cables MDC, BC1, BC2, BC3 also for grounding and lightning protection, additional cables for grounding and lightning protection are not required and installation time and installation costs can be reduced. Preferably, the cables MDC, BC1, BC2, BC3 provide one or several electrical or optical conductors C1, BC1_C1, C3, BC2_C1, C5, BC3_C1 for a downlink transmission between one of the radio remote units RRU1, RRU2, RRU3 and the base station BS and the cables MDC, BC1, BC2, BC3 further provide one or several electrical or optical conductors C2, BC1_C2, C4, BC2_C2, C6, BC3_C2 for an uplink transmission between the base station BS and one of the radio remote units RRU1, RRU2, RRU3.

The base station BS preferably may further comprise a fuse box FB preferably in short distance to the power supply PS with fuses for overvoltage and lightning protection purposes for the power supply conductors of the cables MDC, BC1, BC2, BC3.

Preferably, the distribution system DS may comprise further fuses for overvoltage and lightning protection purposes for the power supply conductors of the cables MDC, BC1, BC2, BC3.

By using only one cable between the base station BS and the distribution system DS and only one cable between the radio remote units RRU1, RRU2, RRU3 and the distribution system DS installation material to fix the cables MDC, BC1, BC2, BC3 can be reduced. Furthermore, the electrical or optical conductors C1, C2, C3, C4, C5, C6, BC1_C1, BC1_C2, BC2_C1, BC2_C2, BC3_C1, BC3_C2 for the data and signalling transmission and preferably further electrical conductors for overvoltage and lightning protection purposes within the tubular inner conductors TIEC, BC1_TIEC, BC2_TIEC, BC3_TIEC only need a conductor jacket suitable for indoor applications, because the conductors are protected by the surrounding tubular electrical conductors, the tubular insulating material, and the cable jacket and are not directly exposed to the environment such as mechanical force effects or weather influences such as humidity.

## Claims

1. A cable (CAB1, CAB2, CAB3, MDC, BC1, BC2, BC3) comprising:
- at least one outer layer (CJ, TOEC, TIM, TIEC),
- an electrical or optical conductor (C1, BC1_C1, BC2_C1, BC3_C1) within said at least one outer layer (CJ, TOEC, TIM, TIEC), and
- an intermediate layer (IL1, IL2) between said at least one outer layer (CJ, TOEC, TIM, TIEC) and said electrical or optical conductor (C1, BC1_C1, BC2_C1, BC3_C1), said intermediate layer (IL1, IL2) comprises an adhesion reducing material characteristic for an interface between said intermediate layer (IL1, IL2) and said at least one outer layer (CJ, TOEC, TIM, TIEC) for stripping said outer layer (CJ, TOEC, TIM, TIEC) from said intermediate layer (IL1, IL2)
**characterized in that** said cable further comprises at least one further electrical or optical conductor (C2, ..., C6, BC1_C2, BC2_C2, BC3_C2) within said at least one outer layer (CJ, TOEC, TIM, TIEC), said adhesion reducing material characteristic is adapted:
- by a porosity of a material composition of said intermediate layer (IL1, IL2) with said intermediate layer (IL1, IL2) comprising a brittle filler material based on polyoefine elastomers or ethylene polypropylene rubber, or
- by a roughness of an outer surface of said intermediate layer (IL1, IL2) by applying polyamide as a material for said intermediate layer (IL1, IL2);
and said intermediate layer (IL1, IL2) fills in gaps between said electrical or optical conductor (C1, BC1_C1, BC2_C1, BC3_C1) and said at least one further electrical or optical conductor (C2, ..., C6, BC1_C2, BC2_C2, BC3_C2).

2. Cable (CAB2) according to any of the preceding claims, wherein said cable (CAB2) comprises at least two webs (WEB1, WEB2) at an outer surface of said intermediate layer (IL2) in a longitudinal direction of said cable (CAB2).

3. Cable (CAB1, CAB2, CAB3, MDC, BC1, BC2, BC3) according to any of the preceding claims, wherein said intermediate layer (IL1, IL2) is adhesive to said electrical or optical conductor (C1BC1_C1, BC2_C1, BC3_C1,) and said at least one further electrical or optical conductor (C2, ..., C6, BC1_C2, BC2_C2, BC3_C2).

4. Cable (CAB3, MDC, BC1, BC2, BC3) according to any of the preceding claims, wherein said electrical or optical conductor (C1, BC1_C1, BC2_C1, BC3_C1) and said at least one further electrical or optical conductor (C2, ..., C6, BC1_C2, BC2_C2, BC3_C2) comprise a first protection layer (PL1_1, PL1_2, PL1_3, PL1_4, PL1_5, PL1_6) adhesive to said electrical or optical conductor (C1, BC1_C1, BC2_C1, BC3_C1) and to said at least one further electrical or optical conductor (C2, ..., C6, BC1_C2, BC2_C2, BC3_(2) and wherein said cable (CAB3, MDC, BC1, BC2, BC3) further comprises a second protection layer (PL2) between said intermediate layer (IL1) and said electrical or optical conductor (C1, BC1_C1, BC2_C1, BC3_C1) and said at least one further electrical or optical conductor (C2, ..., C6, BC1_C2, BC2_C2, BC3_C2).

5. Cable (CAB1, CAB2, CAB3, MDC, BC1, BC2, BC3) according to any of the preceding claims, wherein said at least one outer layer comprises a tubular inner electrical conductor (TIEC) and a tubular outer electrical conductor (TOEC) and wherein said optical conductor (C1BC1_C1, BC2_C1, BC3_C1) and said at least one further optical conductor (C2, ..., C6, BC1_C2, BC2_C2, BC3_C2)are optical fibres.

6. Cable (CAB1, CAB2, CAB3, MDC, BC1, BC2, BC3) according to claim 5, wherein said tubular inner conductor is a hollow corrugated inner conductor and wherein said tubular outer conductor is a corrugated outer conductor.

7. A distribution system (DS) comprising at least three cables (MDC, BC1, BC2, BC3) according to claim 5 or claim 6, wherein said tubular inner conductors (TIEC, BC1_TIEC, BC2_TIEC, BC3_TIEC) of said at least three cables (MDC, BC1, BC2, BC3) are interconnected, wherein said tubular outer conductors (TOEC, BC1_TOEC, BC2_TOEC, BC3_TOEC) of said at least three cables (MDC, BC1, BC2, BC3) are interconnected, wherein a first optical fibre of said first one (MDC) of said at least three cables (MDC, BC1, BC2, BC3) is connected to a first optical fibre of a second one (BC1) of said at least three cables (MDC, BC1, BC2, BC3), and wherein at least one further optical fibre of said first one (MDC) of said at least three cables (MDC, BC1, BC2, BC3) is connected to at least one further optical fibre of a third one (BC2, BC3) of said at least three cables (MDC, BC1, BC2, BC3).

8. Base station (BS) comprising a distribution system (DS) according to claim 7, said base station (BS) further comprises at least two radio remote units (RRU1, RRU2, RRU3), wherein said first one (MDC) of said at least three cables (M DC, BC1, BC2, BC3) is connected to said base station (BS) and to said distribution system (DS), wherein said second one (BC1) of said at least three cables (MDC, BC1, BC2, BC3) is connected to a first one (RRU1) of said at least two radio remote units (RRU1, RRU2, RRU3) and to said distribution system (DS), wherein said third one (BC2, BC3) of said at least three cables (MDC, BC1, BC2, BC3) is connected to a second one (RRU2, RRU3) of said at least two radio remote units (RRU1, RRU2, RRU3) and to said distribution system (DS), wherein said tubular inner and outer conductors (TIEC, BC1_TIEC, BC2_TIEC, BC3_TIEC, TOEC, BC1_TOEC, BC2_TOEC, BC3_TOEC) provide a voltage feed for said at least two radio remote units (RRU1, RRU2, RRU3), wherein said optical fibre provides first data for at least one radio link of said first one (RRU1) of said at least two radio remote units (RRU1, RRU2, RRU3), and wherein said at least one further optical fibre provides second data for at least one radio link of said second one (RRU2, RRU3) of said at least two radio remote units (RRU1, RRU2, RRU3).

9. Base station (BS) according to claim 8, wherein said first optical fibre is adapted to provide a downlink transmission between said base station (BS) and said at least two radio remote units (RRU1, RRU2, RRU3), and wherein said at least one further optical fibre is adapted to provide an uplink transmission between said base station (BS) and said at least two radio remote units (RRU1, RRU2, RRU3).

## Patentansprüche

1. Kabel (CAB1, CAB2, CAB3, MDC, BC1, BC2, BC3), umfassend:
- Mindestens eine äußere Schicht (CJ, TOEC, TIM, TIEC),
- einen elektrischen oder optischen Leiter (C1, BC1_C1, BC2_C1, BC3_C1) Innerhalb der besagten mindestens einen äußeren Schicht (CJ, TOEC, TIM, TIEC), und
- eine Zwischenschicht (IL1, IL2) zwischen der besagten mindestens einen äußeren Schicht (CJ, TOEC, TIM, TIEC) und dem besagten elektrischen oder optischen Leiter (C1, BC1_C1, BC2_C1, BC3_C1), wobei die besagte Zwischenschicht (IL1, IL2) eine adhäsionsmindemde Materialeigenschaft für eine Schnittstelle zwischen der besagten Zwischenschicht (IL1, IL2) und der besagten mindestens einen äußeren Schicht (CJ, TOEC, TIM, TIEC) zum Abziehen der besagten äußeren Schicht (CJ, TOEC, TIM, TIEC) von der besagten Zwischenschicht (IL1, 1L2) aufweist,
**dadurch gekennzeichnet, dass** das besagte Kabel mindestens einen weiteren elektrischen oder optischen Leiter (C2, ..." C6, BC1_C2, BC2_C2, BC3_C2) innerhalb der besagten mindestens einen äußeren Schicht (CJ, TOEC, TIM, TIEC) umfasst, wobei die besagte adhäslonamindernde Meterlalelgenschaft geeignet ist durch:
- eine Porosität einer Matenaizusammensetzung der besagten Zwischenschicht (IL1, IL2), wobei die besagte Zwischenschicht (IL1, 1L2) ein sprödes Füllmaterial auf der Basis von Polyclefinelastomeren oder Polyethylen/Polypropylen-Kautschuk enthält, oder
- eine Rauhelt einer äußeren Fläche der besagten Zwischenschicht (IL1, IL2) durch Anwenden von Polyamid als Materlal für die besagte Zwischenschicht (IL1, IL2);
und wobei die besagte Zwischenschicht (IL1, IL2) Lücken zwischen dem besagten elektrischen oder optischen Leiter (C1, BC1_C1, BC2_C1, BC3_C1) und dem besagten mindestens einen weiteren elektrischen oder optischen Leiter (C2, ..., C6, BC1_C2, BC2_C2, BC3_C2) ausfüllt.

2. Kabel (CAB2) nach Anspruch 1, wobei das besagte Kabel (CAB2) mindestens zwei Bahnen (WEB1, WEB2) an einer äußeren Fläche der besagten Zwischenschicht (IL2) in einer Längsrichtung des besagten Kabels (CAB2) aufweist.

3. Kabel (CAB1, CAB2, CAB3, MDC, BC1, BC2, BC3) nach einem beliebigen der vorstehenden Ansprüche, wobei die besagte Zwischenschicht (IL1, IL2) mit dem besagten elektrischen oder optischen Leiter (C1, BC1_C1, BC2_C1, BC3_C1) und dem besagten mindestens einen weiteren elektrischen oder optischen Leiter (C2, ..., C6, BC1_C2, BC2_C2, BC3_C2) haftend verbunden Ist.

4. Kabel (CAB3, MDC, BC1, BC2, BC3) nach einem beliebigen der vorstehenden Ansprüche, wobei der besagte elektrische oder optische Leiter (C1, BC1_C1, BC2_C1, BC3_C1) und der besagte mindestens eine weitere elektrische oder optische Leiter (C2, ..., C6, BC1_C2, BC2_C2, BC3_C2) eine erste Schutzschicht (PL1_1, PL1_2, PL1_3, PL1_4, PL1_5, KL1_6) autweien, welche mit dem besagten elektrischen oder optischen Leiter (C1, BC1_C1, BC2_C1, BC3_C1) und dem besagten mindestens einen weiteren elektrischen oder optischen Leiter (C2, ..., C6, BC1_C2, BC2_C2, BC3_C2) haftend verbunden ist, und wobei das besagte Kabel (CAB3, MDC, BC1, BC2, BC3) weiterhin eine zweite Schutzschicht (PL2) zwischen der besagten Zwischenschicht (IL1) und dem besagten elektrischen oder optischen Leiter (C1, BC1_C1, BC2_C1, BC3_C1) und dem besagten mindestens einen weiteren elektrischen oder optischen Leiter (C2, ..., C6, BC1_C2, BC2_C2, BC3_C2) aufweist.

5. Kabel (CAB1, CAB2, CAB3, MDC, BC1, BC2, BC3) nach einem beliebigen der vorstehenden Ansprüche, wobei die besagte mindestens eine äußere Schicht einen rohrförmigen inneren elektrischen Leiter (TIEC) und einen rohrförmigen äußeren elektrischen Leiter (TOEC) umfasst, und wobei der besagte optische Leiter (C1, BC1_C1, BC2_C1, BC3_C1) und der besagte mindestens eine weitere optische Leiter (C2, ..., C6, BC1_C2, BC2_C2, BC3_C2) optische Fasern sind.

6. Kabel (CAB1, CAB2, CAB3, MDC, BC1, BC2, BC3) nach Anspruch 5, wobei der besagte rohrförmige Innere Leiter ein gewellter innerer Hohlleiter ist, und wobei der besagte rohrtörmige äußere Leiter ein gewellter äußerer Leiter ist.

7. Verteilungssystem (DS) mit mindestens drei Kabeln (MDC, BC1, BC2, BC3) gemäß Anspruch 5 oder Anspruch 6, wobei die besagten rohrförmigen inneren Leiter (TIEC, BC1_TIEC, BC2_TIEC, BC3_TIEC) der besagten mindestens drei Kabel (MDC, BC1, BC2, BC3) miteinander verbunden sind, wobei die besagten rohrförmigen äußeren Leiter (TOEC, BC1_TOEC, BC2_TOEC, BC3_TOEC) der besagten mindestens drei Kabel (MDC, BC1, BC2, BC3) miteinander verbunden sind, wobei eine erste optische Faser des besagten ersten (MDC) der besagten mindestens drei Kabel (MDC, BC1, BC2, BC3) an eine erste optische Faser eines zweiten (BC1) der besagten mindestens drei Kabel (MDC, BC1, BC2, BC3) angeschlossen ist, und wobei mindestens eine weitere optische Faser das besagten ersten (MDC) der besagten mindestens drei Kabel (MDC, BC1, BC2, BC3) an mindestens eine weitere optische Faser eines dritten (BC2, BC3) der besagten mindestens drei Kabel (MDC, BC1, BC2, BC3) angeschlossen ist.

8. Basisstation (BS) mit einem Vortellungssystem (DS) gemäß Anspruch 7, wobei die besagte Basisstation (BS) weiterhin mindestens zwei entfernte Funkeinheiten (RRU1, RRU2, RRU3) umfasst, wobei das besagte erste (MDC) der besagten mindestens drei Kabel (MDC, BC1, BC2, BC3) an die besagte Basisstation (BS) und an das besagte Verteilungssystem (DS) angeschlossen Ist, wobei das besagte zweite (BC1) der besagten mindestens drei Kabel (MDC, BC1, BC2, BC3) an eine erste (RRU1) der besagten mindestens zwei entfernten Funkeinheiten (RRU1, RRU2, RRU3) und an das besagte Vertailungssystem (DS) angeschlossen ist, wobei das besagte dritte (BC2, BC3) der besagten mindestens drei Kabel (MDC, BC1, BC2, BC3) an eine zweite (RRU2, RRU3) der besagten mindestens zwei entfernten Funkeinheiten (RRU1, RRU2, RRU3) und an das besagte Verteilungssystem (DS) angeschlossen ist, wobei der besagte rohrförmige innere und der besagte rohrförmige äußere Leiter (TIEC, BC1_TIEC, BC2_TIEC, BC3_TIEC, TOEC, BC1_TOEC, BC2_TOEC, BC3_TOEC) eine Spannungsversorgung für die besagten mindestens zwei entfernten Funkeinheiten (RRU1, RRU2, RRU3 bereitstellen, wobei die besagte optische Faser erste Daten für mindestens eine Funkverbindung der besagten ersten (RRU1) der besagten mindestens zwei entfernten Funkeinheiten (RRU1, RRU2, RRU3) bereitstellt, und wobei die besagte mindestens eine weitere optische Faser zweite Daten für mindestens eine Funkverbindung der besagten zweiten (RRU2, RRU3) der besagten mindestens zwei entfernten Funkeinheiten (RRU1, RRU2, RRU3) bereitstellt.

9. Basisstation (BS) nach Anspruch 8, wobei die besagte erste optische Faser für die Bereitstellung einer Downlink-Übertragung zwischen der besagten Basisstation (BS) und den besagten mindestens zwei entfernten Funkeinheiten (RRU1; RRU2, RRU3) geeignet ist, und wobei die besagte mindestens eine weitere optische Faser für die Bereitstellung einer Uplink-Übertragung zwischen der besagten Basisstation (BS) und den besagten mindestens zwei entfernten Funkeinheiten (RRU1; RRU2, RRU3) geeignet ist.

## Revendications

1. Câble (CAB1, CAB2, CAB3, MDC, BC1, BC2, BC3) comprenant :
- au moins une couche extérieure (CJ, TOEC, TIM, TIEC),
- un conducteur électrique ou optique (C1, BC1_C1, BC2_C1, BC3_C1) dans ladite au moins une couche extérieure (CJ, TOEC, TIM, TIEC), et
- une couche intermédiaire (IL1, IL2) entre ladite au moins une couche extérieure (CJ, TOEC, TIM, TIEC) et ledit conducteur électrique ou optique (C1, BC1_C1, BC2_C1, BC3_C1), ladite couche Intermédiaire (IL1, IL2) comprenant une caractéristique de matériau réducteur d'adhérence pour une interface entre ladite couche intermédiaire (IL1, IL2) et ladite au moins une couche extérieure (CJ, TOEC, TIM, TIEC) pour séparer ladite couche extérieure (CJ, TOEC, TIM, TIEC) de ladite couche intermédiaire (IL1, IL2)
**caractérisé en ce que** ledit câble comprend en outre au moins un autre conducteur électrique ou optique (C2, ..., C6, BC1_C2, BC2_C2, BC3_C2) dans ladite au moins une couche extérieure (CJ, TOEC, TIM, TIEC), ladite caractéristique de matériau réducteur d'adhérence est adaptée :
- par une porosité d'une composition de matériau de ladite couche intermédiaire (IL1, IL2), ladite couche intermédiaire (IL1, IL2) comprenant un matériau de remplissage fragile basé sur des élastomères de polyoléfine ou du caoutchouc de polypropylène éthylène, ou
- par une rugosité d'une surface extérieure de ladite couche intermédiaire (IL1, IL2) en appliquant du polyamide comme matériau pour ladite couche Intermédiaire (IL1, IL2) ;
et ladite couche Intermédiaire (IL1, IL2) remplit des vides entre ledit conducteur électrique ou optique (C1, BC1_C1, BC2_C1, BC3_C1) et ledit au moins un autre conducteur électrique ou optique (C2, ..., C6, BC1_C2, BC2_C2, BC3_C2).

2. Câble (CAB2) selon la revendication 1, dans lequel le câble (CAB2) comprend au moins deux bandes (WEB1, WEB2) à une surface extérieure de ladite couche Intermédiaire (IL2) dans une direction longitudinale dudit câble (CAB2).

3. Câble (CAB1, CAB2, CAB3, MDC, BC1, BC2, BC3) selon l'une quelconque des revendications précédentes, dans lequel ladite couche intermédiaire (IL1, IL2) adhère audit conducteur électrique ou optique (C1BC1_C1, BC2_C1, BC3_C1) et audit au moins un autre conducteur électrique ou optique (C2,..., C6, BC1_C2, BC2_C2, BC3_C2).

4. Câble (CAB3, MDC, BC1, BC2, BC3) selon l'une quelconque des revendications précédentes, dans lequel ledit conducteur électrique ou optique (C1, BC1_C1, BC2_C1, BC3_C1) et ledit au moins un autre conducteur électrique ou optique (C2, ..., C6, BC1_C2, BC2_C2, BC3_C2) comprennent une première couche de protection (PL_1, PL1_2, PL1_3, PL1_4, PL1_5, PL1_6) qui adhère audit conducteur électrique ou optique (C1, BC1_C1, BC2_C1, BC3_C1) et audit au moins un autre conducteur électrique ou optique (C2, ..., C6, BC1_C2, BC2_C2, BC3_C2) et dans lequel ledit câble (CAB3, MDC, BC1, BC2, BC3) comprend en outre une deuxième couche de protection (PL2) entre ladite couche intermédiaire (IL1) et ledit conducteur électrique ou optique (C1, BC1_C1, BC2_C1, BC3_C1) et ledit au moins un autre conducteur électrique ou optique (C2,..., C6, BC1_C2, BC2_C2, BC3_C2).

5. Câble (CAB1, CAB2, CAB3, MDC, BC1, BC2, BC3) selon l'une quelconque des revendications précédentes, dans lequel ladite au moins une couche extérieure comprend un conducteur électrique tubulaire intérieur (TIEC) et un conducteur électrique tubulaire extérieur (TOEC) et dans lequel ledit conducteur optique (C1BC1_C1, BC2_C1, BC3_C1) et ledit au moins un autre conducteur optique (C2, ..., C6, BC1_C2, BC2_C2, BC3_C2) sont des fibres optiques.

6. Câble (CAB1, CAB2, CAB3, MDC, BC1, BC2, BC3) selon la revendication 5, dans lequel ledit conducteur tubulaire intérieur est un conducteur Intérieur annelé creux et dans lequel ledit conducteur tubulaire extérieur est un conducteur extérieur annelé.

7. Système de distribution (DS) comprenant au moins trois câbles (MDC, BC1, BC2, BC3) selon la revendication 5 ou la revendication 6, dans lequel lesdits conducteurs tubulaires Intérieurs (TIEC, BC1_TIEC, BC2_TIEC, BC3_TIEC) desdits au moins trois câbles (MDC, BC1, BC2, BC3) sont interconnectés, dans lequel lesdits conducteurs tubulaires extérieurs (TOEC, BC1_TOEC, BC2_TOEC, BC3_TOEC) desdits au moins trois câbles (MDC, BC1, BC2, BC3) sont Interconnectés, dans lequel une première fibre optique dudit premier (MDC) desdits au moins trois câbles (MDC, BC1, BC2, BC3) est connectée à une première fibre optique d'un deuxième (BC1) desdits au moins trois câbles (MDC, BC1, BC2, BC3), et dans lequel au moins une autre fibre optique dudit premier (MDC) desdits au moins trois câbles (MDC, BC1, BC2, BC3) est connectée à au moins une autre fibre optique d'un troisième (BC2, BC3) desdits au moins trois câbles (MDC, BC1, BC2, BC3).

8. Station de base (BS) comprenant un système de distribution (DS) selon la revendication 7, ladite station de base (BS) comprend en outre au moins deux unités radio distantes (RRU1, RRU2, RRU3), dans laquelle ledit premier (MDC) desdits au moins trois câbles (MDC, BC1, BC2, BC3) est connecté à ladite station de base (BS) et audit système de distribution (DS), dans laquelle ledit deuxième (BC1) desdits au moins trois câbles (MDC, BC1, BC2, BC3) est connecté à une première (RRU1) desdites au moins deux unités radio distantes (RRU1, RRU2, RRU3) et audit système de distribution (DS), dans laquelle ledit troisième (BC2, BC3) desdits au moins trois câbles (MDC, BC1, BC2, BC3) est connecté à une deuxième (RRU2, RRU3) desdites au moins deux unités radio distantes (RRU1, RRU2, RRU3) et audit système de distribution (DS), dans laquelle lesdits conducteurs tubulaires Intérieurs et extérieurs (TIEC, BC1_TIEC, BC2_TIEC, BC3_TIEC, TOEC, BC1_TOEC, BC2_TOEC, BC3_TOEC) alimentent en tension lesdites au moins deux unités radio distantes (RRU1, RRU2, RRU3), dans laquelle ladite fibre optique fournit des premières données à au moins une liaison radio de ladite première (RRU1) desdites au moins deux unités radio distantes (RRU1, RRU2, RRU3), et dans laquelle ladite au moins une autre fibre optique fournit des deuxièmes données à au moins une liaison radio de ladite deuxième (RRU2, RRU3) desdites au moins deux unités radio distantes (RRU1, RRU2, RRU3).

9. Station de base (BS) selon la revendication 8, dans laquelle ladite première fibre optique est adaptée pour fournir une transmission en liaison descendante entre ladite station de base (BS) et lesdites au moins deux unités radio distantes (RRU1, RRU2, RRU3), dans laquelle ladite au moins une autre fibre optique est adaptée pour fournir une transmission en liaison montante entre ladite station de base (BS) et lesdites au moins deux unités radio distantes (RRU1, RRU2, RRU3).
